# EUROPEAN PATENT SPECIFICATION

(11) **EP 1 041 107 B1**
(45) Date of publication and mention of the grant of the patent: **06.07.2005**
(21) Application number: 00109104.0
(22) Date of filing: 08.06.1993
(51) Int. Cl.: C08J 9/12, C08J 9/14, C08L 25/04

(54) **Alkenyl aromatic polymer foams and processes for preparing same**
Alkylaromatische Schaumstoffe und Herstellungsverfahren davon
Mousses de polymères alkyle aromatiques et leur procédé de préparation

(30) Priority: 09.06.1992 US 895953; 09.06.1992 US 895970; 09.06.1992 US 896025; 18.09.1992 US 947855; 26.04.1993 US 52855
(43) Date of publication of application: 04.10.2000
(62) Divisional of application: 93915245.0
(73) Proprietor: DOW GLOBAL TECHNOLOGIES INC., Midland, Michigan 48674 (US)
(72) Inventor: Paquet, Andrew N., Granville, OH 43023 (US); Suh, Kyung W., Midland Michigan 48642 (US)
(74) Representative: Casalonga, Axel

(56) References cited:
- EP-A- 0 464 581
- DE-A- 2 008 481
- PATENT ABSTRACTS OF JAPAN vol. 0091, no. 71 (C-291), 16 May 1985 (1985-05-16) & JP 60 042435 A (NIPPON STYRENE PAPER K.K.), 6 March 1985 (1985-03-06)

## Description

The invention relates to a bimodal alkenyl aromatic polymer foam structure having enhanced flexural characteristics and/or enhanced thermally insulative properties. The present invention further relates to alkenyl aromatic polymer foam structures prepared using a halogen-free blowing agent comprising carbon dioxide, a C₁-C₆ alcohol, and water.

A bimodal foam structure is one with a bimodal cell size distribution of relatively larger primary cells and relatively smaller secondary cells. Most conventional foam structures have a unimodal cell size distribution only. A unimodal distribution has a uniform or only primary cell size distribution. Various bimodal foam structures are disclosed in US-A-4,455,272 and US-A-4,559,367 and in EP-A0353701 (EPO Application No. 89114160.8).

US-A-4,559,367 relates a process for making a bimodal foam structure by incorporating finely-divided, water-containing organic vegetable matter into a polymer feedstock, melting the resulting solid mixture , incorporating a volatile foaming agent into the solid mixture melt to form a foamable mixture, and extruding the foamable mixture through a die to form the foam structure.

US-A-4,455,272 relates a process for making a bimodal foam structure by injecting water and a physical blowing agent into a polymer melt and extruding the resulting mixture through a die to form the structure.

EP-A-0353701 relates a process for making a bimodal foam structure by incorporating into the polymer feedstock a fine, water-absorbing mineral powder, melting the resulting solid mixture, incorporating a volatile foaming agent into the solid mixture melt to form a foamable mixture, and extruding the foamable mixture through a die to form the foam structure.

Bimodal foam structures offer advantages over conventional unimodal foam structures. The advantages include greater toughness and enhanced thermally insulating capability. Further, bimodal structures are typically made using water as a blowing agent component and unimodal structures typically are not. Since use of water as a blowing agent component is desirable for environmental reasons, the manufacture of bimodal structures is similarly desirable.

It would be desirable to further enhance the thermally insulating capability of the bimodal foam structures. It would be further desirable to increase such insulating capability without detrimentally affecting the physical properties of the foam structure or detrimentally affecting its manufacture or processing.

A disadvantage of bimodal foam structures is their lack of flexibility. It would be desirable to have a bimodal foam structure which offers the enhanced toughness and thermally insulating capability of a bimodal foam structure yet offers enhanced flexibility.

For environmental reasons, it would be desirable to provide a low density alkenyl aromatic polymer foam structure with a halogen-free blowing agent of economical components. It would further be desirable to be able to control cell size of the foam with selection of type and amount of blowing agent.

According to a first aspect of the present invention, there is a flexible, alkenyl aromatic polymer foam structure comprising a foam of a thermoplastic polymeric composition of greater than 50 percent by weight of alkenyl aromatic polymer. The foam has relatively larger primary cells with an average cell size range of 0.05 to 1.2 millimeters and relatively smaller secondary cells ranging in average cell size from 5 percent to 50 percent of the average cell size of the primary cells. The primary and secondary cells constitute at least 90 percent of the total cell volume of the foam structure. The primary and secondary cells have pinholes between 1 and 30 percent by number of the total number of such cells. The presence of the pinholes enhances the flexibility of the foam structure versus a corresponding foam structure without pinholes.

Further to the first aspect of the present invention, there is a process for making the above-referenced foam structure, comprising: a) heating a thermoplastic polymer material comprising greater than 50 percent by weight alkenyl aromatic polymer to form a melt polymer material, b) incorporating into the melt polymer material at an elevated pressure a blowing agent in liquid or gaseous form comprising at least 3 weight percent water based upon the total weight of the blowing agent to form a foamable gel and in an amount of at least 0.3 parts per hundred parts polymer material by weight, and c) expanding the foamable gel at reduced pressure to form the foam structure. Preferably, the foamable gel is expanded by extruding it through a die into a zone of lower pressure to form the foam structure.

The foam structures comprise greater than 50 and more preferably greater than 70 percent by weight of an alkenyl aromatic polymer. The term alkenyl aromatic polymer is inclusive of polymers derived from one or more alkenyl aromatic compounds such as styrene, methylstyrene, ethylstyrenes, vinyl benzene, divinyl benzene, chlorostyrenes, and bromostyrenes. Minor amounts (that is, 5 percent by weight) of copolymerizable compounds such as C₁-C₄ methacrylates and acrylates, C₁₋₈ olefins, and C₄₋₈ dienes. Suitable compounds include acrylic acid, methacrylic acid, maleic acid, acrylonitrile, maleic anhydride, vinyl acetate, butadiene, pentadiene, hexadiene, ethylene, propylene, butylene, hexene, and octene.

The alkenyl aromatic polymer material may contain other thermoplastic materials as long as the alkenyl aromatic polymer comprises greater than 50 weight percent of alkenyl aromatic monomeric units. Suitable plastic materials may be selected from any which can be blended with the alkenyl aromatic polymer and blown into a foam. Suitable plastics include polyolefins, polyvinylchloride, polystyrene, rubber-modified alkenyl aromatic polymers, cellulosic polymers, polycarbonates, polyamides, polyesters, and polyvinylidene chloride. Suitable polyolefins include polyethylene, polypropylene and polybutylene. Preferred structures comprise substantially (that is, greater than 95 percent) and most preferably entirely of polystyrene, because polystyrene foam is economical, and is commonly employed as a thermally insulating plastic foam.

The foam structures are generally formed by melting and mixing the alkenyl aromatic polymer itself or with other polymers if present to form a plastic melt, incorporating a blowing agent into the plastic melt to form a foamable gel, and extruding the foamable gel through a die to form the foamed structure. During melting and mixing, the polymers are heated to a temperature at or above the glass transition temperature and preferably above the melting point of the polymer. Melting and mixing of polymers and any additives is accomplished by any means known in the art such as with an extruder, mixer, or blender. Likewise, the blowing agent, including water, is incorporated or blended into the plastic melt by any of the same above-described means. The blowing agent is blended with the plastic melt at an elevated pressure sufficient to prevent substantial expansion of the resulting plastic gel or loss of generally homogeneous dispersion of the blowing agent within the gel. Unless otherwise specified, the blowing agent suitably is incorporated into the melt in a weight proportion of between 1 to 30 parts and preferably from 3 to 15 parts per hundred parts of the polymer to be expanded. The foamable gel is preferably passed through a cooler or cooling zone to lower the gel temperature to an optimum foaming temperature. For polystyrene, typical optimum foaming temperatures range from 110°C to 135°C. Melting, mixing, and cooling may occur in a single extruder, tandem extruders, or one or more extruders in series with separate mixers or coolers. The cooled gel is then passed through the die into a zone of reduced or lower pressure to form the foam structure. The zone of lower pressure is at a pressure lower than that in which the foamable gel is maintained prior to extrusion through the die. The lower pressure may be superatmospheric or subatmospheric (vacuum), but is preferably at an atmospheric level.

Unless otherwise specified, the blowing agents which may be utilized in combination with water include inorganic agents, volatile organic agents, and chemical agents which decompose into a gas or other byproducts. Suitable gaseous blowing agents include, but are not limited to nitrogen, carbon dioxide, air, and argon. Suitable volatile organic agents include halogenated and nonhalogenated aliphatic hydrocarbons. Suitable nonhalogenated aliphatic hydrocarbons include C₁₋₉ alkenes and alkanes such as n-butane, isobutane, n-pentane, ethane, propane, isopentane, n-hexane, and isohexane. Suitable halogenated aliphatic hydrocarbons include methyl chloride, ethyl chloride, perfluoromethane, chlorotrifluoromethane, dichlorodifluoromethane, trichlorofluoromethane, difluoromethane, perfluoroethane, 1-chloro-1,1-difluoro-ethane, 1,1-difluoroethane, 1,1,1,2-tetrafluoro-ethane, 1,1,1-trifluoroethane, pentafluoroethane, chlorotetrafluoroethane, 2-chloro-1,1,1,2-tetrafluoroethane chloropentafluoroethane, dichlorotetrafluoroethane, trichlorotrifluoroethane, perfluoropropane, chlorheptafluoropropane, dichloropropane, difluoropropane, dichlorohexafluoropropane, perfluorobutane, chlorononafluorobutane, and perfluorocyclobutane. Suitable chemical blowing agents include azodicarbonamide, azodiisobutyronitrile, benzenesulfonhydrazide, 4,4-oxybenzene sulfonyl-semicarbazide, p-toluene sulfonyl semicarbazide, barium azodicarboxylate, N,N'-dimethyl-N,N'dinitrosoterephthalamide, and trihydrazino triazine.

Preferred blowing agents are those using a combination of water and an inorganic blowing agent such as nitrogen, carbon dioxide, or argon. A most preferred blowing agent comprises water and carbon dioxide. Unless otherwise specified, the blowing agent preferably comprises from 3 to 80 weight percent water and preferably between 5 and 60 weight percent water based upon the total weight of the blowing agent.

The present structure may contain additional additives such as pigments, fillers, antioxidants, extrusion aids, nucleating agents, stabilizing agents, antistatic agents, fire retardants, and acid scavengers.

The foam component of the present structure preferably has density of 16 to 80 kilograms per cubic meter.

Bimodal foam structure are comprised of relatively larger primary foam cells with an average cell size range of 0.05 to 1.2 millimeters and relatively smaller secondary foam cells ranging in cell size from 5 percent to 50 percent of the average cell size of the primary cells. Cell size is determined by the optical microscopy method typically employed in the art in analyzing and characterizing bimodal foam structures. The relatively larger cells in the cell distribution are averaged to determine the average cell size of the primary cells, and the relatively smaller cells in the cell distribution are averaged to determine the average cell size of the secondary cells. The secondary cells may be situated within the cell walls or struts of the primary cells, or may be situated outside of or adjacent to the primary cells individually or in groups of two or more. A strut is a juncture of three or more cell walls. Preferably, the primary cells are generally dispersed throughout the secondary cells such that the foam of the present foam structure has a generally heterogeneous dispersion of the two cell types throughout. Additional teachings directed to plastic foams with bimodal cell distributions are disclosed in US-A-4,455,272 and US-A-4,559,367 and in EP-A0353701.

Bimodal foam structures may be formed with "pinholes" between a portion of the foam cells. The pinholes are microscopic holes defined within cell walls between contiguous primary cells, contiguous secondary cells, or contiguous primary and secondary cells. The pinholes do not materially affect the closed-cell nature of the foam as defined by ASTM D-2856 because the pinholes are present between only a relatively small proportion or portion of the foam cells. The pinholes are preferably present at between 1 and 30 percent by number and more preferably at between 5 and 20 percent by number of the total number of primary and secondary foam cells. Foam structures may be formed with or without pinholes.

Bimodal foams with pinholes exhibit a greater degree of flexibility than corresponding bimodal foams without pinholes. The greater flexibility results in a foam structure that is less brittle and easier to process and fabricate and handle during use without suffering breakage. Greater flexibility also provides greater resistance to cracking when used in stucco applications.

The primary and secondary cells of bimodal foam structures constitute at least 90 percent and preferably at least 95 percent of the total cell volume within the foam structure. Cells larger than the primary cells and smaller than the secondary cells should constitute only a relatively small proportion (less than 10 percent) of the volume displaced to ensure that the desired bimodal distribution of cell sizes will be present in the structure. Voids or cavities present in the foam structure not in the nature of a foam cell are not considered part of the total cell volume within the foam structure.

Though not bound by any particular theory, bimodal cell size distributions are believed to result when foamable gels contain a level of water exceeding the solubility of water in the polymer melt at the extant processing conditions (for example, temperature, pressure, mechanical agitation, etc.). The excess water manifests itself in the form of secondary cells upon expansion of the foamable gel to a foam structure.

Use of aqueous blowing agent systems comprising 1 or more weight percent or more water by weight based upon the total weight of the blowing agent typically result in bimodal foam distributions in foam structures made from commercially-available alkenyl aromatic polymers, particularly polystyrene.

The present foam structures are preferably at least 90 percent closed-cell according to ASTM D-2856. Such closed-cell foams are particularly efficacious in thermally insulative applications.

The blowing agent utilized to prepare bimodal foam structures with pinholes comprises at least 3 weight percent water based upon the total weight of the blowing agent. The water fraction of the blowing agent must also comprise at least 0.3 parts per hundred by weight based upon the weight of the alkenyl aromatic and non-alkenyl aromatic polymers in the present structure. The necessary water fractions refer to blowing agent which is incorporated in liquid, or gaseous (including vapor) form directly into the plastic or polymer melt by external means such as injection into an extruder, mixer, or blender and not by water-carrying or water-generating solids incorporated into the plastic or polymer melt as in the prior art. The use of proper fractions of water in the blowing agent added to the polymer melt externally in liquid or gaseous form and proper selection of foaming temperature results in a foam structure having the desired bimodal cell size distribution with pinholes. The present invention does not preclude the incorporation of water-carrying or water-generating solids into the polymer melt, but water incorporated by means of such solids is not believed to be critical to pinhole formation; thus, water incorporated by means of such solids is not considered in calculation of proper water fractions of blowing agents incorporated into the polymer melt in liquid or gaseous form. Proper selection of foaming temperature ensures a fine, homogeneous dispersion of water in the foamable gel.

Though the preferred process for making the various foam structures taught herein is an extrusion process, it is understood that the structures may be formed by expansion of beads, which may be molded at the time of expansion to form structures of various shapes. Insulating panels formed from molded, expandable beads are commonly referred to as bead board.

The various foam structures may be used to insulate a surface by fashioning them in the form of panels and applying them to the surface. Such panels are useful in any conventional insulating applications such as, for example, roofing, buildings, and refrigerators.

The various foam structures may be formed into a plurality of discrete foamed particles for conventional loose-fill cushioning and packaging applications.

The following are examples of the present invention, and are not to be construed as limiting. Unless otherwise indicated, all percentages, parts, or proportions are by weight.

### EXAMPLES

### Example 1

A bimodal foam structure having pinholes of the present invention was prepared and tested for its thermally insulating capability ("R" value) and mechanical response in the compressive and flexural modes.

General purpose polystyrene resin of 200,000 molecular weight as determined by size exclusion chromatography and other additives to control processing and cell nucleation were fed to a 2 1/2 inch (6.4 centimeter) extruder and intimately blended with a blowing agent mixture to form a foamable gel. The blowing agent was a mixture of 4 parts per hundred (pph) carbon dioxide and 0.5 pph water based on resin weight. The gel was cooled to a foaming temperature of 127°C, and extruded through a die to form the polystyrene foam. The tables summarize measured foam physical properties and mechanical tests. R value was measured according to ASTM C518-85. Additive concentrations were 0.05 pph talc, 0.05 pph calcium stearate, 0.05 magnesium oxide, 0.1 polyethylene, and 0.01 pph blue colorant based upon weight of the resin.

Compressive strength tests were carried out according to the methods of ASTM D 1621-79, and flexural tests were made according to ASTM C 20391. Measurements were made on an Instron 4204 Materials Testing System.

The cellular morphology of the foam structure was bimodal, a distribution of primary and secondary cells. Pinholes were present in cell walls of a portion of the primary cells.

The results of the mechanical tests demonstrated an enhanced degree of flexibility and toughness not typically exhibited in bimodal foam structures. This enhancement was due to the presence of pinholes in the cellular structure of the foam structure.

**Table A**

| Foam Structure Physical Properties | | | |
|---|---|---|---|
| Density (kg/m³) (#/ft³) | Cell Size (mm) | Open Cell (percent) | R-value/in measured cm. °C/w (°F.ft2.hr/btu.in) |
| 35.52 (2.22) | 0.62 | 5.3 | 222 (3.81) |

**Table B**

| Mechanical Test Results for the Foam Structure | | | | | | | |
|---|---|---|---|---|---|---|---|
| Test Direction | Compressive Mode | | | | Flexural Mode | | |
| | σ_{Y} (kPa) (psi) | ε_{Y} (percent) | E_{Y} (kPa) (psi) | T (in-#/in3) | σ_{P} (psi) | ε_{P} (percent) | E_{F} (psi) |
| vertical | 499 (72.32) | 3.74 | 28800 4171 | 8.55 | - | - | - |
| extruded | 325 (46.52) | 3.91 | 14400 2086 | 5.57 | 726 105.3 | 10.12 | 22600 3283 |
| horizontal | 162 (23.50) | 3.46 | 6950 1008 | 3.04 | - | - | - |
| σ_{Y} is the stress at yield. ε_{Y} is the strain at yield. E_{Y} is the compressive mode modulus. T is the foam toughness up to the break point. σ_{P} is the stress at the peak of the flexural stress-strain curve. ε_{P} is the strain at the peak stress. E_{F} is the flexural mode modulus. | | | | | | | |

In Examples 2-3, bimodal foam structures with carbon black of the present invention were prepared.

### Example 2

Foam structures were made with an apparatus comprising a 2-1/2 inch (6.4 centimeter) extruder, a mixer, a cooler, and a die in series. Polystyrene resin having a molecular weight of 200,000 as measured by size exclusion chromotography was fed to the extruder along with 10 percent carbon black, 0.05 pph magnesium oxide, 0.05 pph calcium stearate, and 1.0 pph hexabromocyclododecane by weight to form a polymer melt. A mixture of 1.5 pph water and pph carbon dioxide was added to the polymer melt in the mixer to form a foamable gel. The foamable gel was cooled to 125°C and extruded through the die and expanded between substantially parallel forming plates. The die pressure was 1100 psig (7.6 MPa). The foam structure had primary cells of 0.2 millimeter (mm) in size and a density of 2.3 pcf (36 kg/m³). The foam had a bimodal cell structure with secondary cells in struts and cell walls wherein the secondary cells were one-fifth the size of the primary cell size. Further, the foam structure had pinholes between foam cells and the interior of the foam. Pinholes were present at between 1 percent and 30 percent of the cells. The K-factor or thermal conductivity of the foam at 180 days of aging was 0.202 Btu-in/F°-ft²-hr (0.0291 W/(m.K)).

### Example 3

Using the apparatus and process of Example 2, 7 percent by weight carbon black, 0.05 parts per hundred calcium stearate, 0.05 parts per hundred magnesium oxide, and 0.2 parts per hundred linear low density polyethylene per hundred parts polystyrene resin (density = 0.915-0.93 grams/cubic centimeter; melt index 2.0-2.5) were blended in the extruder to form a polymer melt. A blowing agent mixture of 0.5 parts per hundred water and 4 parts per hundred carbon dioxide were added to the polymer melt to to form a foamable gel. The foamable gel was cooled to 128°C, and expanded through a die to atmospheric pressure between parallel forming plates. The die pressure was 1200 psig (8.3 MPa). The foam structure had a bimodal cell distribution with an average primary cell size of 0.22 mm. The foam structure had internally connected pinholes between cells, and had secondary cells in the struts and cell walls. Pinholes were present at between 1 percent and 30 percent of the cells. Foam structure density was 3.2 pcf (51 kg/m³) (with skins). The K-factor (Btu-in/F°-ft²-hr) after 3 days of aging was 0.212 (0.0306 W/(m.K)), which corresponded to R/inch of 4.7 (32 (m.K)/W; R/cm = 13 (m.K)/W).

### Examples 6-11

Small cell foam structures were prepared according to the process of the present invention, utilizing a 2 inch (6.1 centimeters) diameter extruder which feeds a rotary mixer. The rotary mixer discharge was passed through three heat exchangers. The discharge from the heat exchangers was in turn passed through a plurality of interfacial surface generators or static mixers. The discharge from the static mixers was passed to a slot die. Foam was discharged from the slot die at a rate of 60 kg/hr (130 pounds per hour). Small cell foams with varying amounts of water in the blowing agent mixture were prepared in accordance with the present invention. The compositions of each foam sample and the respective blowing agent proportions are set forth in Table C. The results of the small cell foam evaluation are given in Table D below.

### Comparative Examples 6-9

Foam samples (Comparative Examples 6-9) were prepared following the procedure of Examples 6-11, except that water was omitted from the blowing agent. The other components of the blowing agent mixture are indicated in Table C below. The results of the foam evaluation are given in Table D below.

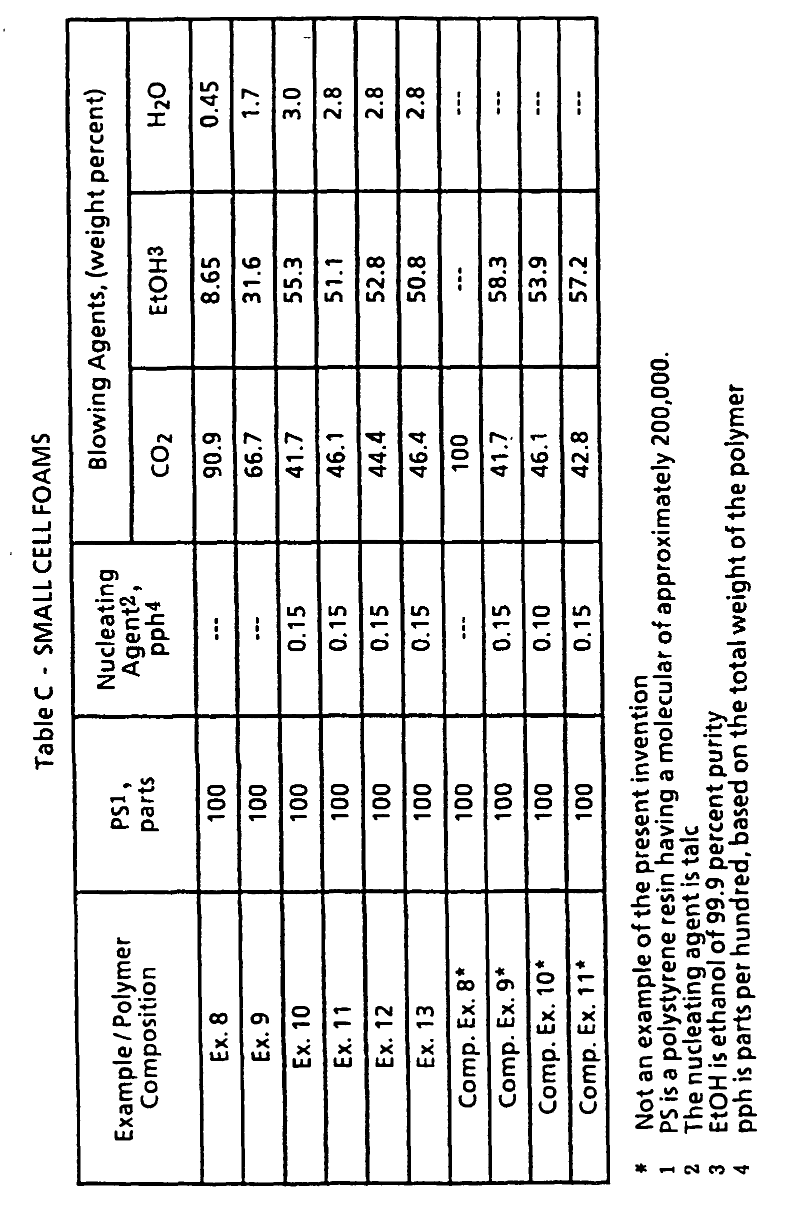

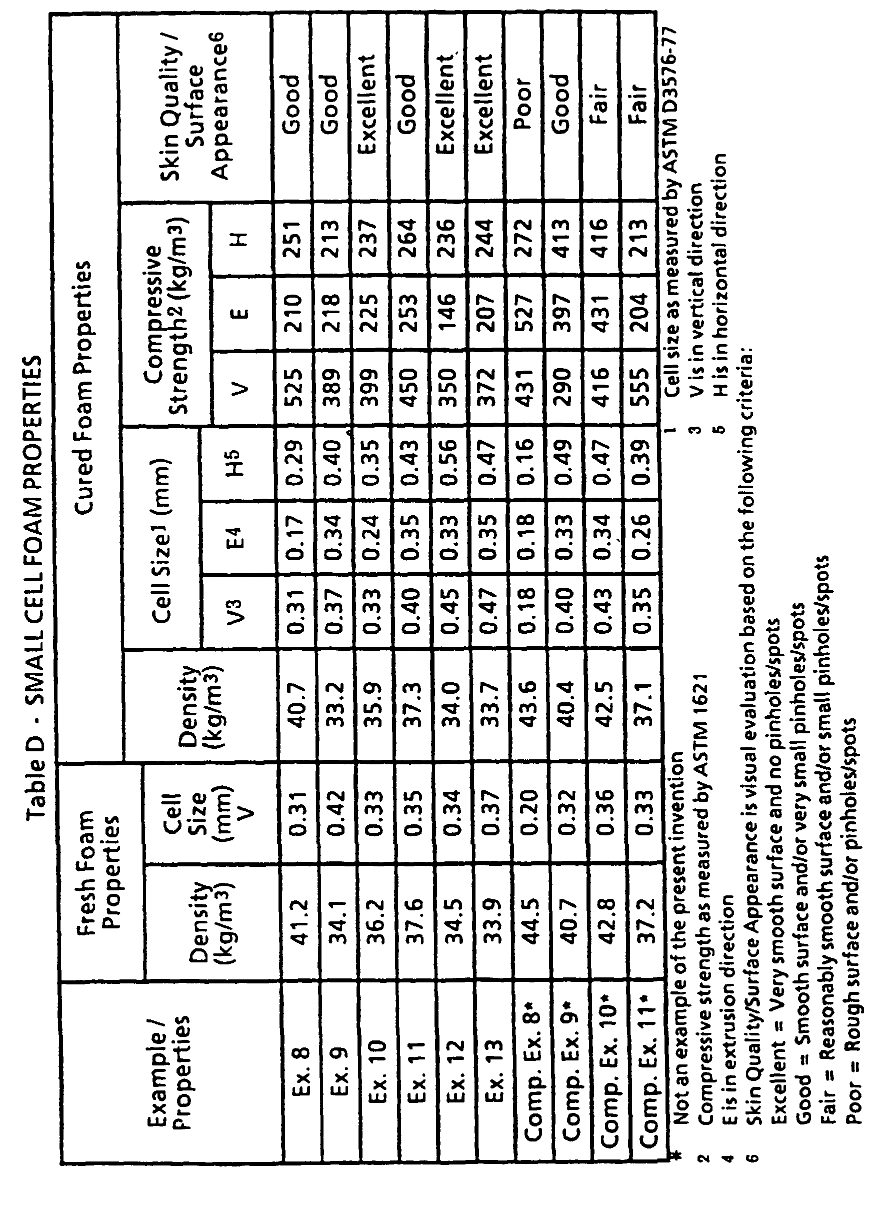

As readily apparent from the data shown in Table D, the small cell foams of the present invention prepared using a blowing agent mixture of CO₂, ethanol and water exhibit improved skin quality and surface appearance. Further, a comparison of the foam prepared in Example 8 with the foam prepared in Comparative Example 7, both prepared with the same amount of carbon dioxide in the blowing agent mixture, clearly shows that by incorporating water in the blowing agent mixture (Example 8) the foam not only exhibits an improved skin quality, but also has a lower density than the foam prepared without the presence of water (Comparative Example 7).

### Examples 12 and 13

Large cell alkenyl aromatic polymer foam structures were prepared with varying amounts of water in the blowing agent mixture in accordance with the present invention using the same procedure and type of equipment as described in Examples 6-11. The large cell foam was discharged from the slot die at a rate of 200 pounds per hour (91 kg/h). The compositions of each foam sample and the respective blowing agent proportions are set forth in Table E. The results of the large cell foam evaluation are given in Table F below.

### Comparative Examples 12 and 13

Foam structures 12 and 13 were prepared following the procedure of Examples 12 and 13 except the alcohol or water component was omitted. The other components of the blowing agent mixture are indicated in Table E below. The results of the foam evaluation are given in Table F below.

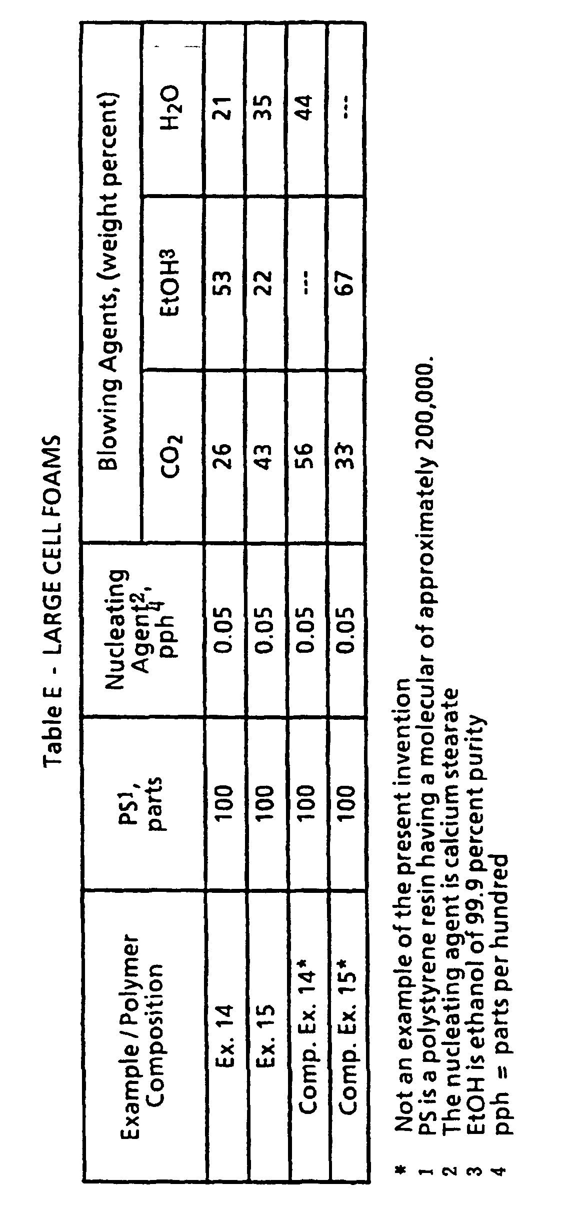

| Table F - LARGE CELL FOAM PROPERTIES | | | |
|---|---|---|---|
| Example Properties | Fresh Foam Density (kg/m³) | Cured Foam Properties | |
| / | | Average Cell Size (mm) | Open cells (percent) |
| Ex. 14 | 30.6 | 2.5 | 0 |
| Ex. 15 | 30.6 | 2.4 | 0 |
| Comp. Ex. 14* | 30.8 | 1.4 | 0 |
| Comp. Ex. 15* | 30.9 | 1.3 | 0 |

| | | | |
|---|---|---|---|
| * Not an example of the present invention | | | |

The data in Table F shows that the cell size of foams prepared using a blowing agent mixture according to the present invention (Examples 12 and 13) can be increased by 70 percent or more compared to the foams prepared in Comparative Examples 12 and 13 where either ethanol or water was omitted from the blowing agent mixture.

While embodiments of the foam structures of the present invention and processes for making have been shown with regard to specific details, it will be appreciated that depending upon the manufacturing process and desired physical properties, the present invention may be modified by various changes while still being fairly within the scope of the novel teachings and principles herein set forth.

## Claims

1. A flexible, closed-cell bimodal, alkenyl aromatic polymer foam structure comprising a foam of a thermoplastic polymer composition that contains greater than 50 percent by weight of an alkenyl aromatic polymer, based on composition weight, the foam having primary cells with an average cell size range of from 0.05 to 1.2 millimeters and smaller, relative to the primary cells, secondary cells with a cell size range of from five to 50 percent of the average cell size of the primary cells, the primary and secondary cells, when taken together, providing a total number of cells that constitute at least 90 percent of total foam structure cell volume, with from 1 to 30 percent of the total number of cells having pinholes defined within cell walls between one or more of continguous primary cells, continguous secondary cells, and contiguous primary and secondary cells.

2. The foam structure of Claim 1, wherein the thermoplastic polymer composition contains greater than 70 weight percent of an alkenyl aromatic polymer.

3. The foam structure of Claim 1 or Claim 2, wherein the thermoplastic polymer composition contains less than 5 weight percent of a copolymerizable monomer.

4. The foam structure of Claim 1 or Claim 2, wherein the alkenyl aromatic polymer is polystyrene.

5. The foam structure of Claim 1 or Claim 2, wherein from 5 to 20 percent of the total number of cells have pinholes defined within their cell walls.

6. The foam structure of Claim 1 or Claim 2, wherein the foam structure has a flexibility, determined in accord with ASTM C 20391, exceeding that of a corresponding bimodal foam structure that lacks the pinholes.

## Patentansprüche

1. Biegsame, geschlossenzellige, bimodale alkenylaromatische Polymerschaumstruktur mit einem Schaumstoff aus einer thermoplastischen Polymerzusammensetzung, die bezogen auf das Gewicht der Zusammensetzung mehr als 50 Gew.-% eines alkenylaromatischen Polymers enthält, wobei der Schaumstoff Primärzellen mit einem durchschnittlichen Zellgrößenbereich von 0,05 bis 1,2 mm und, im Vergleich zu den Primärzellen, kleinere Sekundärzellen mit einem Zellgrößenbereich von 5 bis 50 Prozent der durchschnittlichen Zellgröße der Primärzellen aufweist, wobei die Primär- und Sekundärzellen zusammen genommen eine Gesamtzahl von Zellen bereitstellen, die mindestens 90 Prozent des Gesamtzellvolumens der Schaumstruktur ausmachen, wobei von 1 bis 30 Prozent der Gesamtzahl der Zellen nadelfeine Löcher aufweisen, die in den Zellwänden zwischen einer oder mehreren benachbarten Primärzellen, benachbarten Sekundärzellen und benachbarten Primär- und Sekundärzellen ausgebildet sind.

2. Schaumstruktur nach Anspruch 1, bei der die thermoplastische Polymerzusammensetzung mehr als 70 Gew.-% eines alkenylaromatischen Polymers enthält.

3. Schaumstruktur nach Anspruch 1 oder Anspruch 2, bei der die thermoplastische Polymerzusammensetzung weniger als 5 Gew.-% eines copolymerisierbaren Monomers enthält.

4. Schaumstruktur nach Anspruch 1 oder Anspruch 2, bei der das alkenylaromatische Polymer Polystyrol ist.

5. Schaumstruktur nach Anspruch 1 oder Anspruch 2, bei der von 5 bis 20 Prozent der Gesamtzahl der Zellen nadelfeine Löcher aufweisen, die in ihren Zellwänden ausgebildet sind

6. Schaumstruktur nach Anspruch 1 oder Anspruch 2, bei der die Schaumstruktur eine nach ASTM C 20391 ermittelte Biegsamkeit hat, die größer ist als die einer entsprechenden bimodalen Schaumstruktur ohne die nadelfeinen Löcher.

## Revendications

1. Structure de mousse de polymère aromatique alcénylé, bimodale, à cellules fermées, flexible, comprenant une mousse d'une composition de polymère thermoplastique qui contient plus de 50 % en poids de polymère aromatique alcénylé, par rapport au poids de la composition, la mousse présentant des cellules primaires dont la taille moyenne de cellules va de 0,05 à 1,2 mm, et des cellules secondaires plus petites par rapport aux cellules primaires, dont la taille de cellules représente de 5 à 50 % de la taille moyenne des cellules primaires, les cellules primaires et secondaires, quand on les considère ensemble, fournissant un nombre total de cellules qui constituent au moins 90 % du volume cellulaire total de la structure de mousse, 1 à 30 % du nombre total de cellules présentant des trous d'aiguille formés dans les parois cellulaires entre une ou plusieurs des cellules primaires contigües, des cellules secondaires contigües, et des cellules primaires et secondaires contigües.

2. Structure de mousse selon la revendication 1, dans laquelle la composition de polymère thermoplastique contient plus de 70 % en poids d'un polymère aromatique alcénylé.

3. Structure de mousse selon la revendication 1 ou 2, dans laquelle la composition de polymère thermoplastique contient moins de 5 % en poids d'un monomère copolymérisable.

4. Structure de mousse selon la revendication 1 ou 2, dans laquelle le polymère aromatique alcénylé est un polystyrène.

5. Structure de mousse selon la revendication 1 ou 2, dans laquelle 5 à 20 % du nombre total de cellules présentent des trous d'aiguille formés dans leurs parois cellulaires.

6. Structure de mousse selon la revendication 1 ou 2, présentant une flexibilité, déterminée selon la norme ASTM C 20391, dépassant celle d'une structure de mousse bimodale correspondante qui ne comporte aucun trou d'aiguille.
